# EUROPÄISCHE PATENTSCHRIFT

(11) **EP 2 242 916 B1**
(45) Veröffentlichungstag und Bekanntmachung des Hinweises auf die Patenterteilung: **24.06.2015**
(21) Anmeldenummer: 09711670.1
(22) Anmeldetag: 10.02.2009
(51) Int. Cl.: F02C 7/28, F01D 9/02

(54) **GASTURBINE**
GAS TURBINE
TURBINE À GAZ

(30) Priorität: 20.02.2008 CH 2462008
(43) Veröffentlichungstag der Anmeldung: 27.10.2010
(73) Patentinhaber: ALSTOM Technology Ltd, 5400 Baden (CH)
(72) Erfinder: TSCHUOR, Remigi, CH-5210 Windisch (CH); JONES, Russell, Bond, Jupiter Florida 33458 (US); RODRIGUEZ, Luis J., West Palm Beach Florida 33406 (US); HAEHNLE, Hartmut, 79790 Kuessaberg (DE); DUGGANS, Marion, Oneil, Daytona Beach Florida 32114 (US)
(74) Vertreter: Alstom Technology Ltd
(86) Internationale Anmeldenummer: PCT/EP2009/051518
(87) Internationale Veröffentlichungsnummer: WO 2009/103632

(56) Entgegenhaltungen:
- EP-A- 0 743 424
- DE-A1- 4 324 035
- US-A- 5 470 198
- US-A1- 2003 046 940
- US-A1- 2006 288 707

## Beschreibung

### Technisches Gebiet

Die vorliegende Erfindung bezieht sich auf das Gebiet der thermischen Maschinen. Sie betrifft eine Gasturbine gemäss dem Oberbegriff des Anspruchs 1.

### Stand der Technik

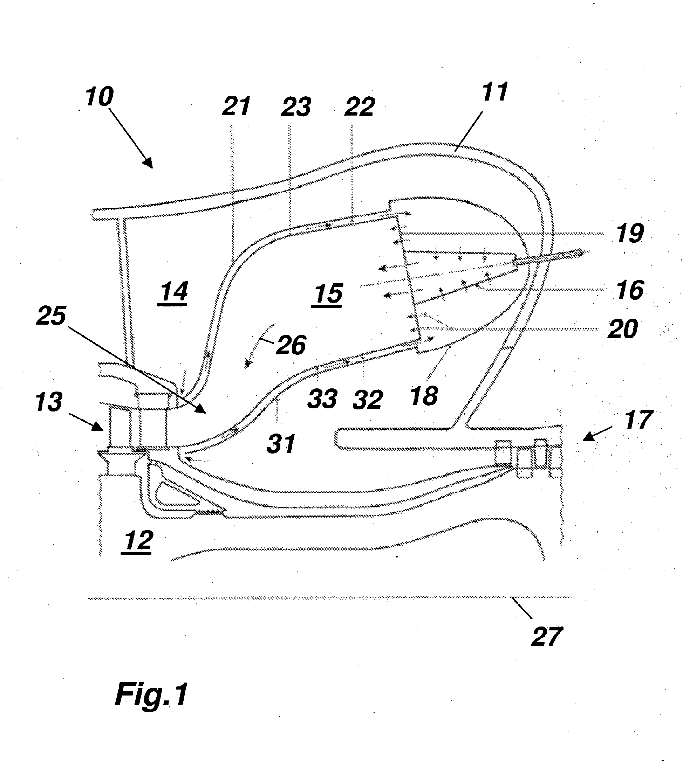

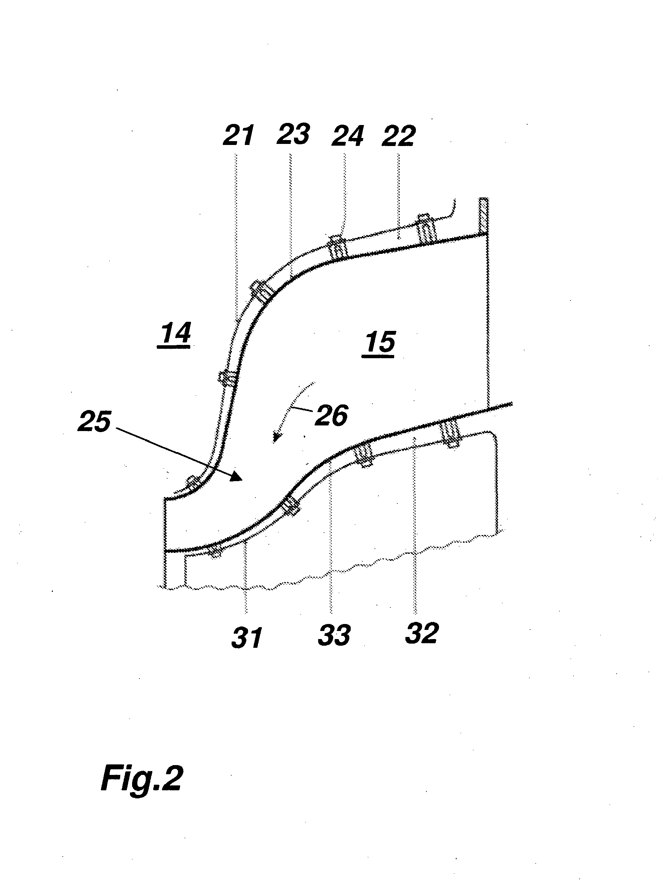

Moderne Industrie-Gasturbinen (IGT) werden in der Regel mit Ringbrennkammern ausgelegt. Meist kleinere IGTs werden als so genannte "Can Annular Combustors" ausgeführt. Bei einer IGT mit Ringbrennkammer ist der Brennraum begrenzt durch die Seitenwände sowie die Eintritts- und Austrittsebene des Heissgases. Eine solche Gasturbine geht Fig. 1 und 2 hervor. Die in den Fig. 1 und 2 im Ausschnitt gezeigte Gasturbine 10 haut ein Turbinengehäuse 11, in dem ein um eine Achse 27 drehender Rotor 12 untergebracht ist. Auf der rechten Seite ist am Rotor 12 ein Verdichter 17 zur Verdichtung von Verbrennungs- und Kühlluft ausgebildet, auf der linken Seite ist eine Turbine 13 angeordnet. Der Verdichter 17 verdichtet Luft, die in ein Plenum 14 einströmt. Im Plenum ist konzentrisch zur Achse 27 eine ringförmige Brennkammer 15 angeordnet, die eingangsseitig durch eine mit Frontplattenkühlluft 20 gekühlte Frontplatte 19 abgeschlossen ist und ausgangsseitig über einen Heissgaskanal 25 mit dem Eingang der Turbine 13 in Verbindung steht.

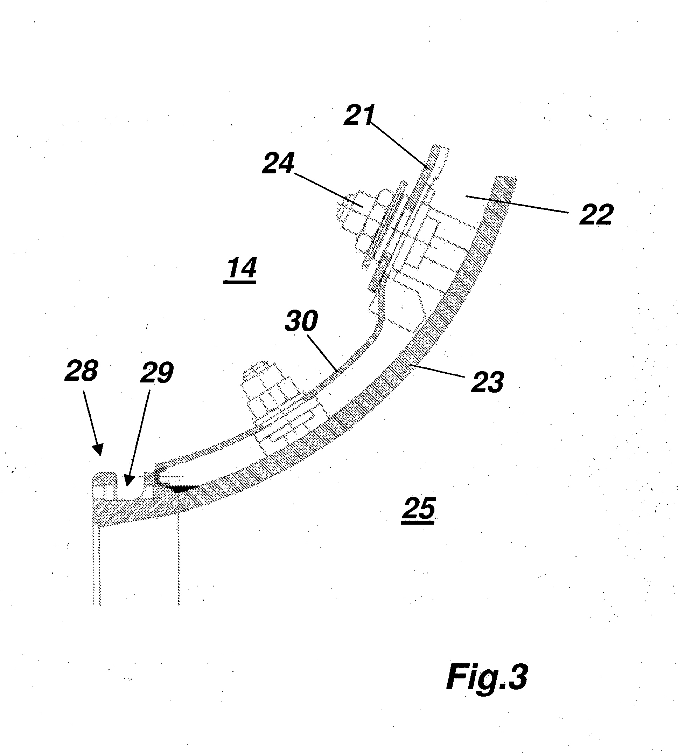

In der Frontplatte 19 sind in einem Ring Brenner 16 angeordnet, die beispielsweise resp. vorzugsweise als Vormischbrenner ausgelegt sind und ein Brennstoff-Luft-Gemisch in die Brennkammer 15 eindüsen. Solche Vormischbrenner gehen beispielsweise aus EP-A1-321 809 oder aus EP-A1-704 657 hervor, wobei diese Druckschriften und die daraus abgeleiteten Weiterentwicklung einen integrierenden Bestandteil dieser Anmeldung bilden. Der sich bei der Verbrennung dieses Brennstoff-Luft-Gemisches bildende Heissluftstrom 26 gelangt durch den Heissgaskanal 25 in die Turbine 13 und wird dort unter Arbeitsleistung entspannt. Die Brennkammer 15 mit dem Heissgaskanal 25 ist aussen mit Abstand von einem äusseren und inneren Kühlhemd 21 bzw. 31 umgeben, die mittels Befestigungselemente 24 an der Brennkammer 15, 25 befestigt sind und zwischen sich und der Brennkammer 15, 25 jeweils einen äusseren und inneren Kühlkanal 22 bzw. 32 ausbilden. In den Kühlkanälen 22, 32 strömt in Gegenrichtung zum Heissgasstrom 26 entlang der Wände der Brennkammer 15, 25 Kühlluft in eine Brennkammerhaube 18 und von dort in die Brenner 16 ein, bzw. als Frontplattenkühlluft 20 direkt in die Brennkammer 15. Das äussere Kühlhemd 21 kann - wie in Fig. 3 gezeigt - durch ein Prallkühlblech 30 verlängert werden, das mit Löchern versehen ist, durch die Kühlluftstrahlen in den Kühlkanal 22 eintreten und senkrecht auf die Aussenschale 23 prallen.

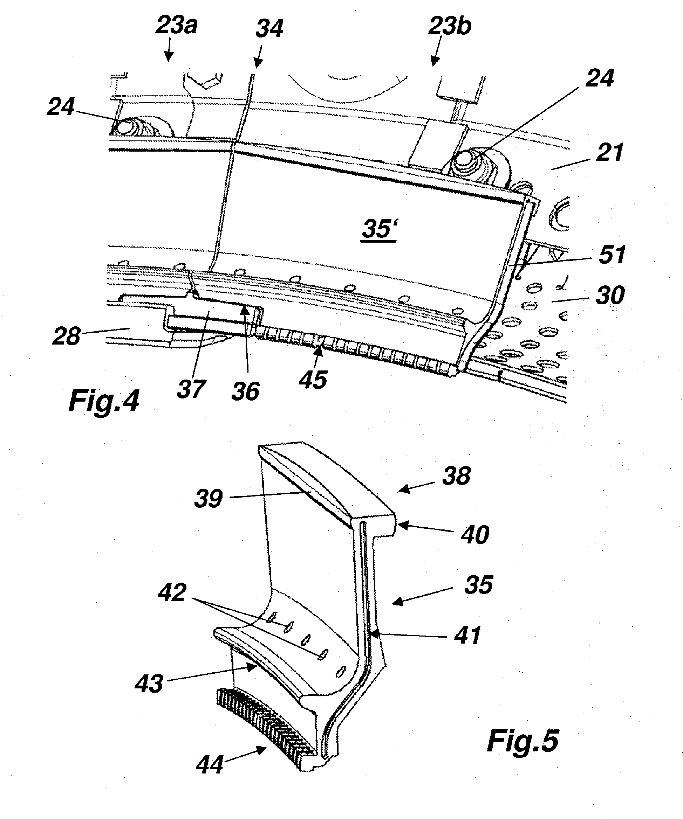

Die Seitenwände der Brennkammer 15, 25 werden dabei entweder als Schalenelemente ausgeführt oder als Vollschalen (Aussenschale 23, Innenschale 33) ausgebildet. Bei der Verwendung von Vollschalen ergibt sich montagebedingt die Notwendigkeit, eine Trennebene (34 in Fig. 4) vorzusehen, die es erlaubt, eine obere Hälfte der Schale 23, 33 (23a in Fig. 4) von der verbleibenden unteren Hälfte der Schale (23b in Fig. 4) abzunehmen, um zum Beispiel den Gasturbinen-Rotor 12 zu montieren bzw. zu demontieren. Die Trennebene 34 weist entsprechend zwei Trennebenenschweissnähte auf, die sich am Beispiel der von dem Anmelder gebauten Gasturbine auf der Höhe der Maschinenachse 27 (Fig. 1) befinden.

An den Enden der Schalen 23, 33 ist ein Flansch 28 mit einer umlaufenden Nut 29 angebracht (Fig. 3), der aus Gründen der mechanischen Festigkeit durch ein über die Trennebene 34 reichendes Verbindungselement in Form einer Brücke 37 (Fig. 4) verstärkt werden kann.

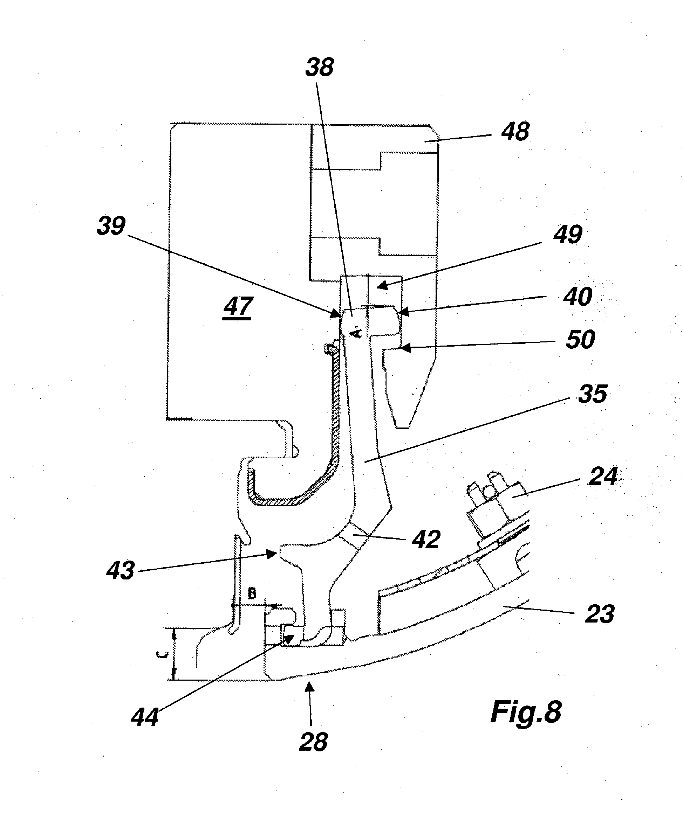

Zur mechanischen Verbindung zwischen der ringförmigen Brennkammer 15, 25 und einem nachfolgenden Turbinenträger TVC (Turbine Vane Carrier Pos. 47 in Fig. 8 bis 13), der die Leitschaufeln der nachfolgenden Turbine 13 trägt, und es sind zur Unterteilung des Plenums 14 in verschiedene Kammern Dichtsegmente vorgesehen, die an der Brennkammer und am Turbinenträger beweglich eingehängt sind und zusammen einen zur Achse 27 konzentrisch angeordneten dichtenden Ring zwischen Brennkammer und Turbinenträger bilden.

Die Dichtsegmente (ähnlich Pos. 35' in Fig. 4 und Pos. 35 in Fig. 5) sollten idealerweise folgende Funktionen bzw. Eigenschaften aufweisen:
- Sie dichten zwei Kammern des Plenums ab.
- Sie sollten daher auch untereinander dichten (Montage einer Dichtlippe zwischen benachbarten Segmenten nötig).
- Sie koppeln zwei Baumodule mechanisch miteinander (Brennkammer vs. Turbinenträger)
- Sie bilden ein Zwischenstück/Übergangsstück zwischen zwei Baumodulen. (Brennkammer vs. Turbinenträger)
- Sie werden (mit Ausnahme der Segmente an der Trennebene) rotationssymmetrisch ausgeführt.
- Sie können Kühllöcher/-bohrungen aufweisen (für einen gezielten Kühlluftmassenstrom).
- Sie sollten grosse axiale und radiale Kräfte aufnehmen.
- Sie sollten einen grossen axialen und radialen Bewegungsspielraum aufweisen, insbesondere bei transienten Vorgängen.
- Sie sollten temperaturfest sein (Zeitfestigkeit-Dauerfestigkeit).
- Sie sollten einfach und kostengünstig herstellbar sein.
- Sie dürfen im Betrieb in Umfangsrichtung nicht rotieren - dies macht die Montage von Umfangssicherungen nötig.

Die Dichtsegmente sollen vor dem Einsetzen der Aussenschalen 23 in den dafür vorgesehenen Flansch 28 montiert werden, sie könnten jedoch auch erst in der Gasturbine montiert werden. Die Dichtsegmente können über eine Umfangssicherung verfügen. Für die Umfangssicherung ist z.B. eine Nut vorgesehen und ein Sicherungsstift befindet sich bereits eingeschweisst im Flansch 28 der Aussenschale 23.

Die Dichtsegmente können weiterhin in den Seitenflächen ("wedge faces") eine Nut bzw. einen Schlitz für schmale Dichtungen (Messerdichtungen) aufweisen. Bei der Montage müssen auch diese Dichtungen eingesetzt werden. Das Einsetzen der Dichtungen in die Nuten und weiter der Dichtsegmente in den dafür vorgesehenen Flansch kann sich als äusserst heikel erweisen und ist direkt von der geometrischen Auslegung des Dichtsegment-Fusses (Pos. 44 in Fig. 4) sowie der Auslegung des Aussenschalenflansches 28 abhängig. Die thermisch sehr stark belasteten Aussenschalen 23 bewegen sich transient axial und radial; dabei entstehen hohe Druck- und Zugspannungen.

Das Dichtsegment bildet das (mechanische) Bindeglied von der Brennkammer 15, 25 zum Turbinenträger 47, welcher sich transient vorwiegend axial bewegt. Die von der Aussenschale 23 geforderte Betriebsdauer beträgt typischerweise zwei so genannte Service-Intervalle ("service intervalls/service cycles"). Ein Betriebsintervall beschreibt die Zeit zwischen der (Wieder-)Inbetriebnahme der Brennkammer und dem Rekonditionieren der Komponenten.

Die DE 4324035 offenbart eine Gasturbine gemäß dem Stand oder Technik.

Es hat sich nun in der Praxis herausgestellt, dass die Aussenschalen 23 im Betrieb oft am Ende der Trennebenenschweissnähte einzureissen beginnen. Es wird vermutet, dass das Einreissen auch dadurch verursacht werden kann, dass die Aussenschale, insbesondere bei den transienten Bewegungen, nicht ausreichend Spielraum hat und so zusätzliche mechanische Spannungen auf die Aussenschale einwirken.

### Darstellung der Erfindung

Es ist Aufgabe der Erfindung, eine thermische Maschine, insbesondere Gasturbine, zu schaffen, welche die oben genannten Nachteile bekannter Maschinen vermeidet und die Gefahr des Einreissens der geschweissten Brennkammerschalen durch konstruktive Massnahmen absolut minimiert.

Die Aufgabe wird durch die Gesamtheit der Merkmale des Anspruchs 1 gelöst. Wesentlich für die Erfindung ist, dass die Dichtsegmente so gelagert sind, dass die Brennkammer bzw. die Aussenschale sich relativ zum Turbinenträger unabhängig voneinander in axialer Richtung und in radialer Richtung bewegen kann.

Zusätzlich ist die Gasturbine nach der Erfindung dadurch gekennzeichnet, dass die Dichtsegmente mit dem Kopf in einem Aufnahmeraum am Turbinenträger derart gelagert sind, dass sie dort radial verschiebbar und um den Kopf schwenkbar sind. Die Dichtsegmente sind mit dem Fuss an der Aussenschale der Brennkammer derart gelagert, dass sie um den Fuss schwenkbar sind.

Weiterhin zeichnet sich die Erfindung dadurch aus, dass die Aussenschale am turbinenseitigen Ende einen Flansch aufweist, dass der Flansch auf der Aussenseite mit einer umlaufenden Nut versehen ist, und dass die Dichtsegmente mit dem Fuss verschwenkbar in der Nut gelagert sind. Vorzugsweise weist die Nut ein L-förmiges Querschnittsprofil mit einer Hinterschneidung auf, wobei der Fuss hakenförmig ausgebildet ist und hinter die Hinterschneidung greift.

Weiterhin erfindungswesentlich ist, dass in der Nut des Flansches zur mechanischen Stabilisierung der verschweissten Aussenschale die Trennebene überdeckende Brücken angeordnet sind, und dass die an die Trennebene angrenzenden Dichtsegmente zur Anpassung an die Brücken eine entsprechende Aussparung aufweisen.

Weiterhin kann der Fuss mit Vorteil erste Mittel zur Umfangssicherung aufweisen, die insbesondere eine im Fuss angebrachte, in axialer Richtung verlaufende Sicherungsnut umfassen, in welche ein am Flansch fixierter Sicherungsstift eingreift.

Eine weitere Ausgestaltung der Erfindung zeichnet sich dadurch aus, dass der Fuss zweite Mittel zu dessen aufweist, welche vorzugsweise eine Mehrzahl von in Umfangsrichtung nebeneinander im Fuss angeordneten Kühlschlitzen umfassen.

Eine andere Ausgestaltung zeichnet sich dadurch aus, dass zwischen benachbarten Dichtsegmenten Dichtungsmittel zum Abdichten der Lücken zwischen den Dichtsegmenten vorgesehen sind. Vorzugsweise umfassen die Dichtungsmittel Dichtungsnute in den Seitenflächen und in die Dichtungsnute eingesetzte Messerdichtungen.

Gemäss einer weiteren Ausgestaltung der Erfindung ist der Aufnahmeraum am Turbinenträger zwischen dem Turbinenträger und einer am Turbinenträger (Pos. 47 in Fig. 8) befestigten Halteplatte ausgebildet, wobei der Aufnahmeraum einen im wesentlichen rechteckigen Querschnitt und eine in radialer Richtung nach innen gehende Öffnung aufweist, durch welche die Dichtsegmente sich mit ihrem Kopf in den Aufnahmeraum hinein erstrecken, wobei die axiale Breite des Aufnahmeraums in etwa gleich der Breite des Kopfes der Dichtsegmente ist, und wobei die radiale Höhe des Aufnahmeraums ein Mehrfaches der radialen Höhe des Kopfes beträgt, und der Aufnahmeraum im Bereich der Öffnung so ausgebildet ist, dass die Dichtsegmente im eingebauten Zustand gegen ein Herausrutschen aus dem Aufnahmeraum gesichert sind. Insbesondere weist der Aufnahmeraum im Bereich der Öffnung einen Absatz auf, hinter welchem die Dichtsegmente mit dem Kopf eingehakt sind.

Bevorzugt weisen die Dichtsegmente am Kopf an den Wänden des Aufnahmeraums anliegende Anlageflächen auf, die bombiert ausgeführt sind. Die turbinenseitige Anlagefläche ist dabei mit Vorteil so ausgeführt, dass sie eine gerade Kontaktlinie mit der Wand des Aufnahmeraums hat. Dabei ist diese gerade Kontaktlinie so bearbeitet, dass damit sichergestellt wird, dass das dichtsegment darauf abrollen kann.

Weiterhin kann es nach Bedarf vorgesehen werden, dass die Dichtsegmente mit in der Segmentfläche angeordneten Kühlbohrungen zum Durchlass von Kühlluft ausgestattet sind.

### Kurze Erläuterung der Figuren

Die Erfindung soll nachfolgend anhand von Ausführungsbeispielen im Zusammenhang mit der Zeichnung näher erläutert werden. Alle für das unmittelbare Verständnis der Erfindung nicht wesentlichen Merkmale sind weggelassen worden. Gleiche Elemente sind in den verschiedenen Figuren mit den gleichen Bezugszeichen versehen. Die Strömungsrichtung der Medien ist mit Pfeilen angegeben. Es zeigen
- Fig. 1: den Längsschnitt durch eine gekühlte Ringbrennkammer einer Gasturbine nach dem Stand der Technik;
- Fig. 2: im einzelnen die Ringbrennkammer aus Fig. 1 mit den aussen befestigten Kühlhemden;
- Fig. 3: im Längsschnitt das turbinenseitige Ende der Aussenschale der Brennkammer aus Fig. 1 mit dem angesetzten Flansch;
- Fig. 4: in einem Ausschnitt die in einer Trennebene zusammenstossenden Hälften einer Aussenschale gemäss Fig. 3 mit den an die Trennebene angrenzenden, besonders ausgebildeten Dichtsegmenten, gemäss einem bevorzugten Ausführungsbeispiel der Erfindung;
- Fig. 5: in einer perspektivischen Darstellung ein zu Fig. 4 analoges, nicht an die Trennebene angrenzendes Dichtsegment;
- Fig. 6: das Dichtsegment gemäss Fig. 4 aus einem anderen Blickwinkel;
- Fig. 7: das Dichtsegment gemäss Fig. 4 von unten gesehen; und
- Fig. 8-13: zur Verdeutlichung des grossen Bewegungsspielraumes im Längsschnitt verschiedene Stellungen von Brennkammer und Turbinenträger relativ zueinander und die dazugehörige Position eines Dichtsegments gemäss Fig.5-7.

### Wege zur Ausführung der Erfindung

Wesentlich für die Erfindungsidee ist ein neuartiges Dichtsegment mit einem zusätzlichen, erweiterten Bewegungsspielraum bei gleichzeitiger Sicherstellung der ausreichenden mechanischen Festigkeit und der geforderten aerodynamischen Dichtheit. Das Dichtsegment ist so ausgeführt, dass am Fusse des Segments, über den gesamten Umfang des Flansches, gezielt lokal gekühlt wird. Der Kühlluftmassenstrom wird dabei nicht mehr unterbrochen, auch nicht in den transienten Extrempositionen des Dichtsegments.

Wie bereits oben erwähnt, zeichnen sich die neuartigen Dichtsegmente durch folgende konstruktive Einzelheiten aus:
- Sie können gegossen werden.
- Sie dichten untereinander, wobei hierfür die Montage einer Dichtlippe nötig ist.
- Sie koppeln zwei Baumodule miteinander (Brennkammer vs. Turbinenträger).
- Sie bilden ein Zwischenstück/Übergangsstück zwischen zwei Baumodulen (Brennkammer vs. Turbinenträger).
- Sie werden, mit Ausnahme der Segmente an der Trennebene, rotationssymmetrisch ausgeführt.
- Sie können Kühllöcher aufweisen (für einen gezielten Kühlluftmassenstrom).
- Sie nehmen grosse axiale und radiale Kräfte auf.
- Sie heben einen grossen axialen und radialen Bewegungsspielraum, insbesondere in den transienten Bereichen.
- Sie sind temperaturbeständig (Zeitfestigkeit - Dauerfestigkeit).
- Sie weisen eine Umfangssicherung auf.

Die Füsse der Dichtsegmente sind so ausgelegt, dass diese genau in die jeweilige Flanschgeometrie passen und im Betrieb, trotz der thermischen Verformung der Schalen und des Flansches, weiterhin den Flansch zu halten vermögen und gleichzeitig einen ausreichenden Kühlluftmassenstrom zulassen.

Der Kopf des Dichtsegmentes ist so ausgeführt, dass rückseitig die bombierte (konvexe) Fläche linear auf dem Turbinenhalter abrollen kann.
Die Frontseite hingegen hängt gelegentlich transient regelrecht in der Rückhalteplatte, welche ihrerseits an den Turbinenträger geschraubt ist.
Dieser stark vergrösserte Bewegungsspielraum, mit der gleich bleibenden Funktionalität des Dichtsegmentes in dessen Extrempositionen, steht dabei im Mittelpunkt der vorliegenden Erfindung

Das in den Fig. 4 bis 13 dargestellte Ausführungsbeispiel bezieht sich auf die Anwendung der Erfindung bei der Aussenschale einer Gasturbine. Es sind hier Anwendungen gezeigt, welche sich bei verschiedenen transienten Zuständen der Gasturbine einstellen können. Die erfindungsgemässen Auslegungsprinzipien gelten aber selbstverständlich auch bei einer konstruktiven Neuauslegung für eine vergleichbare Anwendung.

Wie bereits weiter oben erwähnt, ist bei einer Gasturbine mit Ringbrennkammer 15, 25 der Brennraum begrenzt durch die Seitenwände 23, 33 sowie die Eintritts- und Austrittsebene des Heissgases (Fig. 1, 2). Die Brennkammerseitenwände werden dabei entweder als Schalenelemente ausgeführt oder als Vollschalen. Bei der Verwendung von Vollschalen ergibt sich montagebedingt die Notwendigkeit einer Trennebene (34 in Fig. 4), die es erlaubt, das Oberteil (z.B. die obere Hälfte 23a der Aussenschale 23) abzunehmen, um zum Beispiel den Gasturbinen-Rotor 12 zu montieren bzw. zu demontieren. Die Trennebene 34 weist entsprechend zwei Trennebenenschweissnähte auf, die sich am Beispiel einer von dem Anmelder gebauten Gasturbine auf der Höhe der Maschinenachse 27 befinden. Der Trennebenenflansch 28 wird insbesondere bei diesen Gasturbinen mit Brücken verstärkt (Pos. 37 in Fig. 4) und so müssen die angrenzenden Dichtsegmente 35' auf der Höhe der Brücken 37 eine entsprechende Aussparung 36 aufweisen. Es gibt somit im Umfang eine grössere Anzahl, normale' Dichtelemente 35 (Fig. 5-7) und an der Trennebene 34 zwei so genannte Trennebenen-Dichtsegmente 35', die links und rechts von der Trennebene 34 angeordnet sind (Fig. 4).

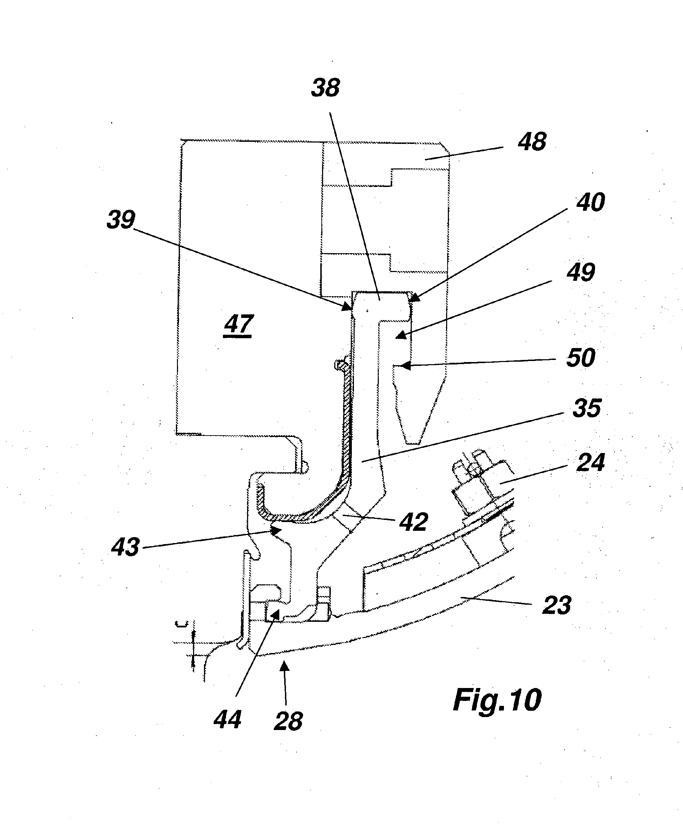

Die Dichtsegmente 35, 35' gemäss Fig. 4-7 haben die Form von Kreisringsegmenten, die am unteren Ende einen hakenförmig ausgebildeten Fuss 44 aufweisen, und am oberen Ende einen hakenförmig ausgebildeten Kopf 38. Kopf 38 und Fuss 44 sind über eine im oberen Teil gerade verlaufende und im unteren Teil doppelt gebogene Wand verbunden. Im Bereich der oberen ersten Biegung sind in der Wand in Umfangsrichtung verteilt Kühlbohrungen 42 angeordnet, durch die Kühlluft hindurchtreten kann. Im Bereich der unteren zweiten Biegung ist eine seitlich vorstehende Leiste vorgesehen, die in bestimmten Betriebszuständen (Fig. 10) einen Anschlag bildet.

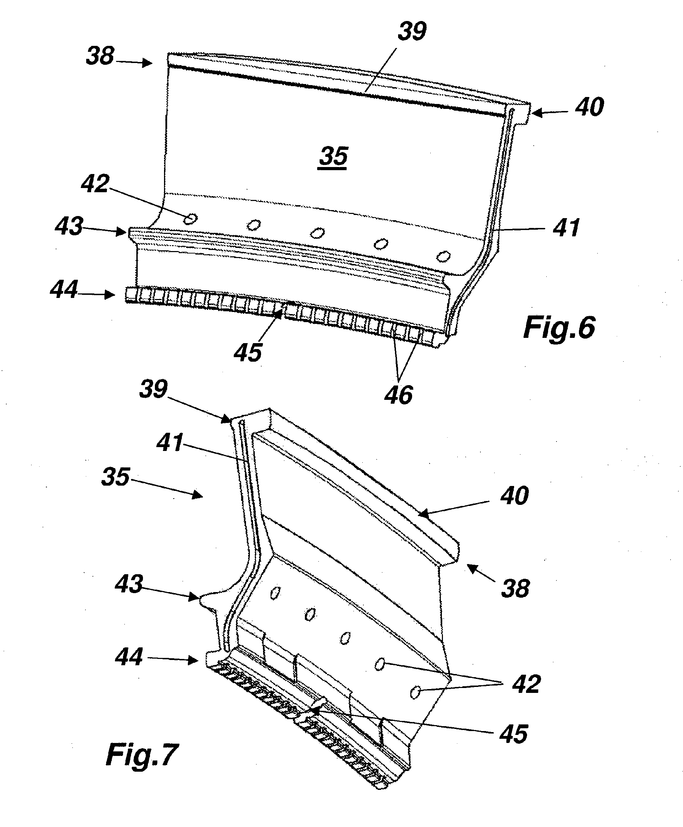

Die Dichtsegmente 35, 35' gemäss Fig. 4-7 verfügen über eine Umfangssicherung. Für die Umfangssicherung ist eine Sicherungsnut 45 auf der Unterseite des Fusses 44 vorgesehen (siehe insbesondere Fig. 7). In die Sicherungsnut 45 greift im montierten Zustand der Dichtsegmente einen in den Figuren nicht dargestellten Sicherungsstift ein, der sich bereits eingeschweisst im Flansch 28 der Aussenschale 23 befindet (Fig. 4).

Die Dichtsegmente 35, 35' weisen in den Seitenflächen ("wedge faces") eine Dichtungsnut (Schlitz) für schmale Dichtungen (Messerdichtungen 51, Fig. 4) auf.
Bei der Montage müssen auch die Messerdichtungen 51 eingesetzt werden. Fig. 4 zeigt die Messerdichtungen in montierten Zustand. Fig. 5-7 zeigen die für die Messerdichtungen gefertigten Dichtungsnuten 41 in den Seitenflächen.

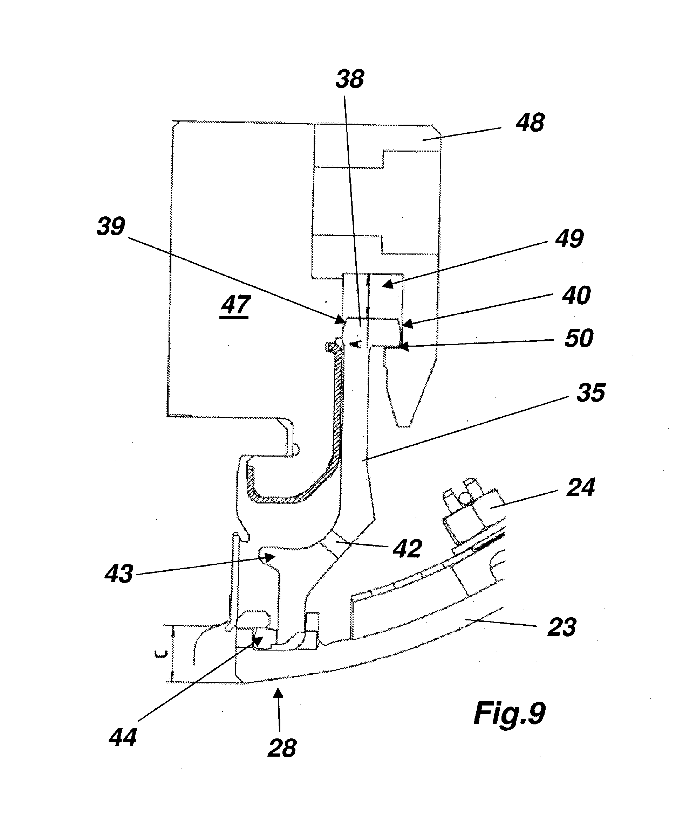

Wie bereits weiter oben erwähnt, kann sich das Einsetzen der Messerdichtungen 51 in die Dichtungsnuten 41 und weiter der Dichtsegmente 35, 35' in den dafür vorgesehenen Flansch 28 als äusserst heikel erweisen, und es ist direkt von der geometrischen Auslegung des Dichtsegmentfusses 44 (Fig. 5-7) sowie der Auslegung des Aussenschalenflansches 28 abhängig. Die Querschnittsprofile und die Geometrie beider Teile sind beispielsweise aus der Fig. 9 ersichtlich.

Die Füsse 44 der Dichtsegmente 35, 35' müssen so ausgelegt werden, dass diese genau in die jeweilige Flanschgeometrie des Flansches 28 passen und im Betrieb trotz der thermischen Verformung der Schalen 23, 33 und des Flansches 28 weiterhin den Flansch 28 und damit die Brennkammer "zu halten vermögen" und einen Kühlluftmassenstrom zulassen. Aus den Fig. 8-13, die sich auf unterschiedliche Betriebszustände der Gasturbine beziehen und sich entsprechend durch unterschiedliche axiale und radiale Abstände B, C und A zwischen Brennkammer 15, 25 und Turbinenträger 47 (B, C) bzw. Dichtsegment 35, 35' und Turbinenträger 47 (A) auszeichnen, sind die zugehörigen Positionen der Dichtsegmente 35, 35' erkennbar.

In den Betriebszuständen gemäss Fig. 9 und 10 ist der axiale Abstand B zwischen Flansch 28 und Turbinenträger 47 Null, während der radiale Abstand A zwischen dem Kopf 38 der Dichtsegmente 35, 35' und der Decke des Aufnahmeraumes 49 ebenso wie der radiale Abstand C zwischen Brennkammer und Turbinenträger maximal (Fig. 9) bzw. minimal (Fig. 10) sind. Beim minimalen Abstand A = 0 schlagen die Dichtsegmente 35, 35' mit dem Kopf 38 und mit der Leiste 43 an (Fig. 10). Bei maximalem Abstand A (Fig. 9) hängen die Dichtsegmente 35, 35' mit ihrem hakenförmigen Kopf 38 an dem Absatz 50 im Aufnahmeraum 49.

Im Betriebszustand gemäss Fig. 8 ist der axiale Abstand B>0, während sich der radiale Abstand C gegenüber Fig. 9 etwas verkleinert. Die Dichtsegmente 35, 35' sind leicht nach links verkippt, was einer Schwenkung um den Fuss 44 entspricht.

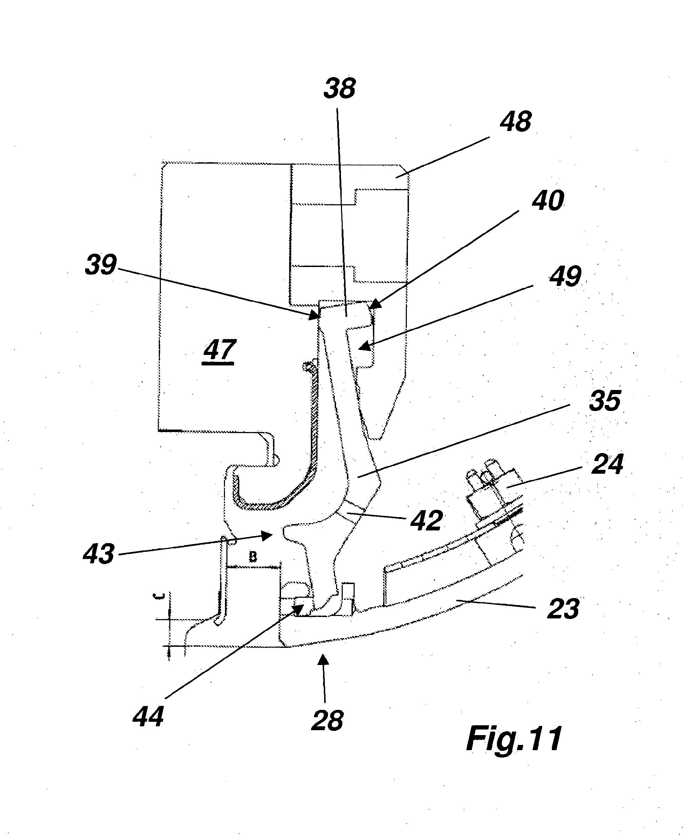

Im Betriebszustand gemäss Fig. 11 hat sich der axiale Abstand B weiter vergrössert und der radiale Abstand noch einmal verkleinert. Die Dichtsegmente 35, 35' sind weiter nach links verkippt, bis sie oben mit dem Kopf 38 im Aufnahmeraum 49 und mit dem geraden Teil der Wand am unteren Ende der Halteplatte 48 anliegen.

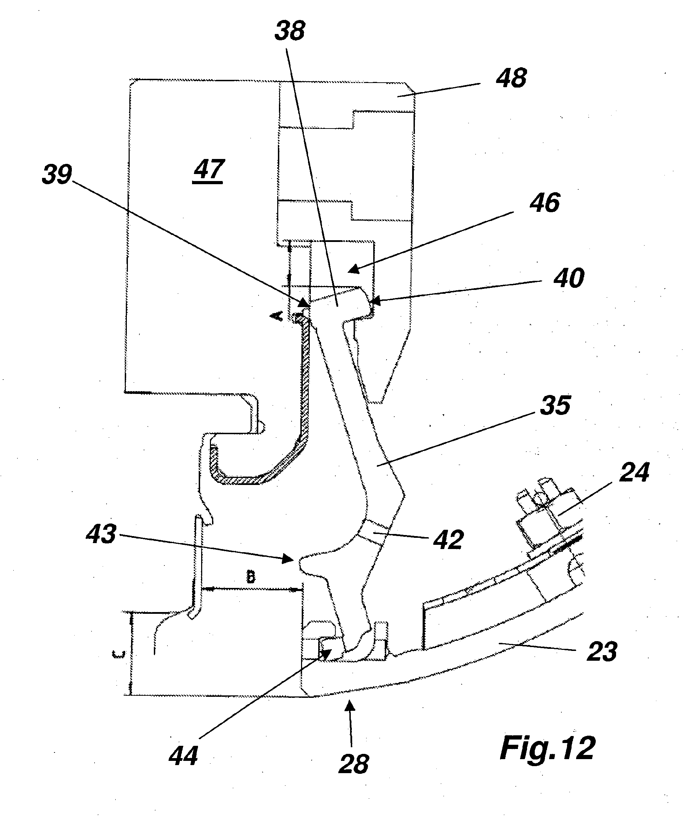

Ein weiteres (maximales) Verkippen ist gemäss Fig. 12 dann möglich, wenn gleichzeitig der radiale Abstand C maximal wird.

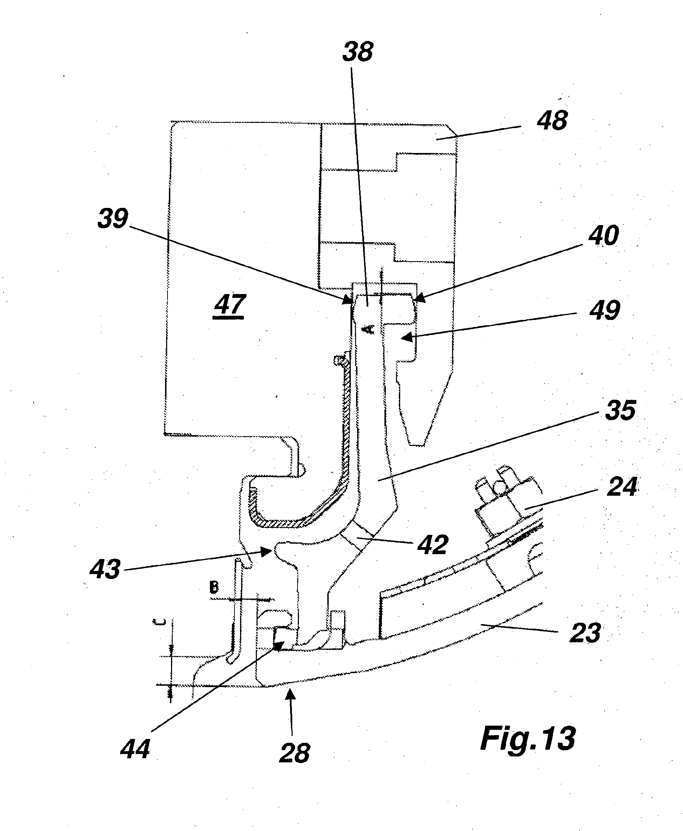

Ein mittlerer Betriebszustand ist schliesslich in Fig. 13 dargestellt: Hier haben alle Abstände A,B und C eine mittlere Grösse.

Der Kopf 38 des Dichtsegmentes 35, 35' ist so ausgeführt, dass (rückseitig) die bombierte (konvexe) Dichtfläche 39 linear auf dem Turbinenträger 47 abrollen kann (Fig. 8). Die Frontseite, nämlich die Hakenleiste 40, hingegen "hängt" gelegentlich transient regelrecht in der Halteplatte bzw. Rückhalteplatte 48, welche ihrerseits an den Turbinenträger 47 geschraubt ist (Fig. 9 und Fig. 12).

Das Dichtsegment 35, 35' ist dabei so ausgeführt, dass am Fusse 44 des Segmentes, über den gesamten Umfang des Flansches 28, gezielt lokal gekühlt wird. Der Kühlluftmassenstrom wird auch in transienten Extrempositionen des Dichtsegmentes 35, 35' (Fig.12) nicht mehr unterbrochen. Dies wird unter anderem dadurch erreicht, dass in Fuss 44 in Umfangsrichtung verteilt eine Vielzahl von Kühlschlitzen 46 vorgesehen sind, und dass der Fuss 44 auf der Unterseite durch eine gewellte Fläche begrenzt wird, die zwischen Flansch 28 und Fuss 44 Raum für die Kühlluftströmung lässt.

### Bezugszeichenliste

- 10: Gasturbine
- 11: Turbinengehäuse
- 12: Rotor
- 13: Turbine
- 14: Plenum
- 15: Brennkammer
- 16: Brenner (Doppelkegel- oder EV-Brenner)
- 17: Verdichter
- 18: Brennkammerhaube
- 19: Frontplatte
- 20: Frontplattenkühlluft
- 21: Äusseres Kühlhemd
- 22: Äusserer Kühlkanal
- 23: Aussenschale
- 23a: Obere Hälfte der Aussenschale
- 23b: Untere Hälfte der Aussenschale
- 24: Befestigungselement
- 25: Heissgaskanal
- 26: Heissgasstrom
- 27: Achse
- 28: Flansch
- 29: Nut (Flansch)
- 30: Prallkühlblech
- 31: Inneres Kühlhemd
- 32: innerer Kühlkanal
- 33: Innenschale
- 34: Trennebene
- 35,35': Dichtsegment
- 36: Aussparung
- 37: Brücke (Verbindungselement)
- 38: Kopf (Dichtsegment), Kopfpartie
- 39: Dichtfläche
- 40: Hakenleiste
- 41: Dichtungsnut
- 42: Kühlbohrung
- 43: Leiste
- 44: Fuss (Dichtsegment), Fusspartie
- 45: Sicherungsnut
- 46: Kühlschlitz
- 47: Turbinenträger
- 48: Halteplatte
- 49: Aufnahmeraum
- 50: Absatz
- 51: Messerdichtung
- A,B,C: Abstand

## Patentansprüche

1. Gasturbine (10), welche eine durch eine in einer Trennebene teilbare Aussenschale (23) nach aussen begrenzte, von einem Plenum (14) umgebene, ringförmige Brennkammer (15, 25) umfasst, welche ausgangsseitig einen Heissgastrom (26) an eine nachfolgende Turbine (13) abgibt, wobei der Rotor (12) der Turbine (13) von einem Leitschaufeln tragenden Turbinenträger (47) umschlossen ist, und wobei die Brennkammer (15, 25) mit dem Turbinenträger (47) über einen Ring bildende Dichtsegmente (35, 35') mechanisch verbunden sind, die an ihrem Innenrand mit einer Fusspartie (44) an der Aussenschale (23) und an ihrem Aussenrand mit einer Kopfpartie (38) am Turbinenträger (47) derart beweglich gelagert sind, dass die Brennkammer (15, 25) bzw. die Aussenschale (23) relativ zum Turbinenträger (47) unabhängig voneinander in axialer Richtung (B) und in radialer Richtung (C) einen Freiheitsraum aufweisen, wobei die Dichtsegmente (35, 35') mit der Kopfpartie (38) in einem Aufnahmeraum (49) am Turbinenträger (47) derart gelagert sind, dass sie mit dem Kopf (38) im Aufnahmeraum (49) radial verschiebbar und um den Kopf (38) schwenkbar sind und der Aufnahmeraum (49) zwischen dem Turbinenträger (47) und einer am Turbinenträger (47) befestigten Halteplatte (48) ausgebildet ist,
wobei die Aussenschale (23) am turbinenseitigen Ende einen Flansch (28) aufweist und der Flansch (28) auf der Aussenseite mit einer umlaufenden Nut (29) versehen ist, **dadurch gekennzeichnet, dass** die Dichtsegmente (35, 35') mit der Fusspartie (44) schwenkbar in der Nut (29) gelagert sind, dass in der Nut (29) des Flansches (28) zur mechanischen Stabilisierung der verschweissten Aussenschale (23) die Trennebene (34) überdeckende Brücken (37) angeordnet sind, und dass die an die Trennebene (34) angrenzenden Dichtsegmente (35') zur Anpassung an die Brücken (37) eine entsprechende Aussparung (36) aufweisen.

2. Gasturbine nach Anspruch 1, **dadurch gekennzeichnet, dass** die Dichtsegmente (35, 35') mit dem Fuss (44) an der Aussenschale (23) der Brennkammer (15, 25) derart gelagert sind, dass sie um die Fusspartie (44) schwenkbar sind.

3. Gasturbine nach Anspruch 1, **dadurch gekennzeichnet, dass** die Nut (29) ein L-förmiges Querschnittsprofil mit einer Hinterschneidung aufweist, und dass die Fusspartie (44) hakenförmig ausgebildet ist und hinter die Hinterschneidung greift.

4. Gasturbine nach Anspruch 1 oder 3, **dadurch gekennzeichnet, dass** die Fusspartie (44) erste Mittel (45) zur Umfangssicherung aufweist.

5. Gasturbine nach Anspruch 4, **dadurch gekennzeichnet, dass** die ersten Mittel zur Umfangssicherung eine in Fusspartie (44) angebrachte, in axialer Richtung verlaufende Sicherungsnut (45) umfassen, in welche ein am Flansch (28) fixierter Sicherungsstift eingreift.

6. Gasturbine nach einem der Ansprüche 1 bis 5, **dadurch gekennzeichnet, dass** die Fusspartie (44) zweite. Mittel (46) zur Kühlung des Fusses aufweist.

7. Gasturbine nach Anspruch 6, **dadurch gekennzeichnet, dass** als zweite Mittel eine Mehrzahl von in Umfangsrichtung nebeneinander in der Fusspartie (44) angeordneten Kühlschlitzen (46) vorgesehen sind.

8. Gasturbine nach einem der Ansprüche 1 bis 7, **dadurch gekennzeichnet, dass** zwischen benachbarten Dichtsegmenten (35, 35') Dichtungsmittel (41, 51) zum Abdichten der Lücken zwischen diesen Dichtsegmenten (35, 35') vorgesehen sind.

9. Gasturbine nach Anspruch 8, **dadurch gekennzeichnet, dass** die Dichtungsmittel aus mindestens einer in den Seitenflächen der Dichtsegmente vorgesehene Dichtungsnute (41) und aus entsprechenden Messerdichtungen (51) bestehen.

10. Gasturbine nach Anspruch 1, **dadurch gekennzeichnet, dass** der Aufnahmeraum (49) einen im wesentlichen rechteckigen Querschnitt aufweist, dass der Aufnahmeraum (49) eine in radialer Richtung nach innen gehende Öffnung aufweist, durch welche die Dichtsegmente (35, 35') sich mit ihrer Kopfpartie (38) in den Aufnahmeraum (49) hinein erstrecken, dass die axiale Breite des Aufnahmeraums (49) in etwa gleich der Breite der Kopfpartie (38) der Dichtsegmente (35, 35') ist, dass die radiale Höhe des Aufnahmeraums (49) ein Mehrfaches der radialen Höhe der Kopfpartie (38) beträgt, und dass der Aufnahmeraum (49) im Bereich der Öffnung so ausgebildet ist, dass die Dichtsegmente (35, 35') im eingebauten Zustand gegen ein Herausrutschen aus dem Aufnahmeraum (49) gesichert sind.

11. Gasturbine nach Anspruch 10, **dadurch gekennzeichnet, dass** der Aufnahmeraum (49) im Bereich der Öffnung einen Absatz (50) aufweist, hinter dem die Dichtsegmente (35, 35') mit der Kopfpartie (38) eingehakt sind.

12. Gasturbine nach Anspruch 10 oder 11, **dadurch gekennzeichnet, dass** die Dichtsegmente (35, 35') an Kopfpartie (38) an den Wänden des Aufnahmeraums (49) anliegende Anlageflächen (39, 40) aufweisen, und dass die Anlageflächen (39, 40) bombiert ausgeführt sind.

13. Gasturbine nach Anspruch 12, **dadurch gekennzeichnet, dass** die turbinenseitige Anlagefläche (39) so ausgeführt ist, dass sie eine gerade Kontaktlinie mit der Wand des Aufnahmeraums (49) hat.

14. Gasturbine nach den Ansprüchen 11 bis 13, **dadurch gekennzeichnet, dass** die gerade Kontaktlinie (39) dergestalt bearbeitet ist, dass das Dichtsegment (35, 35') darauf abzurollen vermag.

15. Gasturbine nach einem der Ansprüche 1 bis 14, **dadurch gekennzeichnet, dass** die Dichtsegmente (35, 35') mit in der Segmentfläche angeordneten Kühlbohrungen (42) zum Durchlass von Kühlluft ausgestattet sind.

## Claims

1. Gas turbine (10), which comprises an annular combustor (15, 25) which is outwardly delimited by an outer shell (23) which can be split in a parting plane, and which is enclosed by a plenum (14), which combustor on the outlet side discharges a hot gas flow (26) to a subsequent turbine (13), wherein the rotor (12) of the turbine (13) is encompassed by a turbine vane carrier (47) which carries stator vanes, and wherein the combustor (15, 25) is mechanically connected to the turbine vane carrier (47) via sealing segments (35, 35') which form a ring and which are movably mounted on their inner edge by a foot section (44) on the outer shell (23) and on their inner edge are movably mounted by a head section (38) on the turbine vane carrier (47), in such a way that the combustor (15, 25) or the outer shell (23) have an expansion space relative to the turbine vane carrier (47) independently of each other in the axial direction (B) and in the radial direction (C), wherein the sealing segments (35, 35') are mounted by the head section (38) in a locating space (49) on the turbine vane carrier (47)) in such a way that they are radially movable by the head (38) in the locating space (49) and are pivotable around the head (38) and the locating space (49) is formed between the turbine vane carrier (47) and a holding plate (48) which is fastened on the turbine vane carrier (47), wherein the outer shell (23) at the turbine-side end has a flange (28), and the flange (28) on the outer side is provided with an encompassing groove (29), **characterized in that** the sealing segments (35, 35') are pivotably mounted in the groove (29) by the foot section (44), **in that** bridges (37) which overlap the parting plane (34) are arranged in the groove (29) of the flange (28) for mechanical stabilization of the welded outer shell (23), and **in that** the sealing segments (35') which are adjacent to the parting plane (34) have a corresponding recess (36) for adapting to the bridges (37).

2. Gas turbine according to Claim 1, **characterized in that** the sealing segments (35, 35') are mounted by the foot (44) on the outer shell (23) of the combustor (15, 25) in such a way that they are pivotable around the foot section (44).

3. Gas turbine according to Claim 1, **characterized in that** the groove (29) has an L-shaped cross-sectional profile with an undercut, and **in that** the foot section (44) is formed in the shape of a hook and engages behind the undercut.

4. Gas turbine according to Claim 1 or 3, **characterized in that** the foot section (44) has first means (45) for circumferential locking.

5. Gas turbine according to Claim 4, **characterized in that** the first means for circumferential locking comprises a locking groove (45) which is provided in the foot section (44), extends in the axial direction, and in which engages a locking pin which is fixed on the flange (28).

6. Gas turbine according to one of Claims 1 to 5, **characterized in that** the foot section (44) has second means (46) for cooling the foot.

7. Gas turbine according to Claim 6, **characterized in that** as second means a multiplicity of cooling slots (46), which are arranged in the foot section (44) next to each other in the circumferential direction, are provided.

8. Gas turbine according to one of Claims 1 to 7, **characterized in that** between adjacent sealing segments (35, 35') sealing means (41, 51) are provided for sealing the gaps between these sealing segments (35, 35').

9. Gas turbine according to Claim 8, **characterized in that** the sealing means comprise at least one sealing groove (41), which is provided in the side faces of the sealing segments, and corresponding knife-edge seals (51).

10. Gas turbine according to Claim 1, **characterized in that** the locating space (49) has an essentially rectangular cross section, **in that** the locating space (49) has an opening which extends inwards in the radial direction and through which the sealing segments (35, 35') extend by their head section (38) into the locating space (49), **in that** the axial width of the locating space (49) is approximately equal to the width of the head section (38) of the sealing segments (35, 35'), **in that** the radial height of the locating space (49) is a multiple of the radial height of the head section (38), and **in that** the locating space (49) in the region of the opening is formed so that the sealing segments (35, 35') in the installed state are secured against slipping out of the locating space (49).

11. Gas turbine according to Claim 10, **characterized in that** the locating space (49) in the region of the opening has a shoulder (50), behind which the sealing segments (35, 35') are hooked in by the head section (38).

12. Gas turbine according to Claim 10 or 11, **characterized in that** the sealing segments (35, 35') on the head section (38) have abutment faces (39, 40) which abut against the walls of the locating space (49), and **in that** the abutment faces (39, 40) are constructed in a cambered manner.

13. Gas turbine according to Claim 12, **characterized in that** the turbine-side abutment face (39) is constructed so that it has a straight contact line with the wall of the locating space (49).

14. Gas turbine according to Claims 11 to 13, **characterized in that** the straight contact line (39) is machined in such a way that the sealing segment (35, 35') can roll upon it.

15. Gas turbine according to one of Claims 1 to 14, **characterized in that** the sealing segments (35, 35') are equipped with cooling holes (42), which are arranged in the segment surface, for the passage of cooling air.

## Revendications

1. Turbine à gaz (10), qui comprend une chambre de combustion annulaire (15, 25) limitée vers l'extérieur par une coque extérieure (23) pouvant être divisée suivant un plan de séparation, entourée par un plénum (14), qui délivre du côté de la sortie un flux de gaz chaud (26) à une turbine suivante (13), le rotor (12) de la turbine (13) étant entouré par un support de turbine (47) portant des aubes directrices, et la chambre de combustion (15, 25) étant connectée mécaniquement au support de turbine (47) par le biais de segments d'étanchéité (35, 35') formant un anneau, qui sont supportés de manière mobile au niveau de leur bord interne par une partie de base (44) contre la coque extérieure (23) et au niveau de leur bord externe par une partie de tête (38) contre le support de turbine (47), de telle sorte que la chambre de combustion (15, 25) et/ou la coque extérieure (23) présentent, par rapport au support de turbine (47), indépendamment l'une de l'autre dans la direction axiale (B) et dans la direction radiale (C) un espace libre, les segments d'étanchéité (35, 35') étant supportés avec la partie de tête (38) dans un espace de réception (49) contre le support de turbine (47) de telle sorte qu'ils puissent être déplacés radialement avec la tête (38) dans l'espace de réception (49) et qu'ils puissent pivoter autour de la tête (38) et l'espace de réception (49) étant réalisé entre le support de turbine (47) et une plaque de retenue (48) fixée au support de turbine (47),
la coque extérieure (23) présentant, à l'extrémité du côté de la turbine, une bride (28) et la bride (28) étant pourvue, du côté extérieur, d'une rainure périphérique (29),
**caractérisée en ce que** les segments d'étanchéité (35, 35') sont supportés par la partie de base (44) de manière pivotante dans la rainure (29), **en ce que** dans la rainure (29) de la bride (28) sont disposés des ponts (37) recouvrant le plan de séparation (34) pour la stabilisation mécanique de la coque extérieure soudée (23), et **en ce que** les segments d'étanchéité (35') adjacents au plan de séparation (34) présentent, pour l'adaptation aux ponts (37), un évidement correspondant (36).

2. Turbine à gaz selon la revendication 1, **caractérisée en ce que** les segments d'étanchéité (35, 35') sont supportés par la base (44) contre la coque extérieure (23) de la chambre de combustion (15, 25) de telle sorte qu'ils puissent pivoter autour de la partie de base (44).

3. Turbine à gaz selon la revendication 1, **caractérisée en ce que** la rainure (29) présente un profilé en forme de L en section transversale avec une contre-dépouille, et **en ce que** la partie de base (44) est réalisée en forme de crochet et vient en prise par l'arrière avec la contre-dépouille.

4. Turbine à gaz selon la revendication 1 ou 3, **caractérisée en ce que** la partie de base (44) présente des premiers moyens (45) pour la fixation périphérique.

5. Turbine à gaz selon la revendication 4, **caractérisée en ce que** les premiers moyens pour la fixation périphérique comprennent une rainure de fixation (45) montée dans la partie de base (44), s'étendant dans la direction axiale, dans laquelle vient en prise une goupille de fixation fixée à la bride (28).

6. Turbine à gaz selon l'une quelconque des revendications 1 à 5, **caractérisée en ce que** la partie de base (44) présente des deuxièmes moyens (46) pour le refroidissement de la base.

7. Turbine à gaz selon la revendication 6, **caractérisée en ce que** l'on prévoit en tant que deuxièmes moyens une pluralité de fentes de refroidissement (46) disposées les unes à côté des autres dans la direction périphérique dans la partie de base (44).

8. Turbine à gaz selon l'une quelconque des revendications 1 à 7, **caractérisée en ce qu'**entre des segments d'étanchéité adjacents (35, 35') sont prévus des moyens d'étanchéité (41, 51) pour étanchéifier les espaces entre ces segments d'étanchéité (35, 35').

9. Turbine à gaz selon la revendication 8, **caractérisée en ce que** les moyens d'étanchéité se composent d'au moins une rainure d'étanchéité (41) prévue dans les faces latérales des segments d'étanchéité et de joints de couteaux (51) correspondants.

10. Turbine à gaz selon la revendication 1, **caractérisée en ce que** l'espace de réception (49) présente une section transversale essentiellement rectangulaire, **en ce que** l'espace de réception (49) présente une ouverture s'étendant vers l'intérieur dans la direction radiale, à travers laquelle les segments d'étanchéité (35, 35') s'étendent dans l'espace de réception (49) avec leur partie de tête (38), **en ce que** la largeur axiale de l'espace de réception (49) est approximativement égale à la largeur de la partie de tête (38) des segments d'étanchéité (35, 35'), **en ce que** la hauteur radiale de l'espace de réception (49) représente un multiple de la hauteur radiale de la partie de tête (38) et **en ce que** l'espace de réception (49) est réalisé dans la région de l'ouverture de telle sorte que les segments d'étanchéité (35, 35') soient fixés dans l'état monté pour les empêcher de glisser hors de l'espace de réception (49).

11. Turbine à gaz selon la revendication 10, **caractérisée en ce que** l'espace de réception (49) présente dans la région de l'ouverture un épaulement (50), derrière lequel les segments d'étanchéité (35, 35') sont accrochés par la partie de tête (38).

12. Turbine à gaz selon la revendication 10 ou 11, **caractérisée en ce que** les segments d'étanchéité (35, 35') présentent, au niveau de la partie de tête (38), des faces d'appui (39, 40) s'appliquant contre les parois de l'espace de réception (49), et **en ce que** les faces d'appui (39, 40) sont réalisées sous forme bombée.

13. Turbine à gaz selon la revendication 12, **caractérisée en ce que** la face d'appui (39) du côté de la turbine est réalisée de telle sorte qu'elle présente une ligne de contact droite avec la paroi de l'espace de réception (49).

14. Turbine à gaz selon les revendications 11 à 13, **caractérisée en ce que** la ligne de contact droite (39) est usinée de telle sorte que le segment d'étanchéité (35, 35') puisse rouler sur celle-ci.

15. Turbine à gaz selon l'une quelconque des revendications 1 à 14, **caractérisée en ce que** les segments d'étanchéité (35, 35') sont munis d'alésages de refroidissement (42) disposés dans la surface des segments pour le passage d'air de refroidissement.
